# EUROPEAN PATENT APPLICATION

(11) **EP 2 433 895 A1**
(43) Date of publication of application: **28.03.2012**
(21) Application number: 10179488.1
(22) Date of filing: 24.09.2010
(51) Int. Cl.: B66F 7/28, B66F 9/18, B62B 3/06, B60P 3/12

(54) **Vehicle supporting device**

(71) Applicant: M2IG Sp. z o.o., 60-532 Poznan (PL)
(72) Inventor: Czartoryski, Michael Adam, 60-532, Poznan (PL); Grotenberg, Mads, 2680, Solrød Strand (DK)
(74) Representative: Tonnesen, Bo

(57) **Abstract**

Vehicle supporting device (1) for a vehicle (V) comprising a carrier structure (2) and support members (3) extending from the carrier structure (2) and serving to support a vehicle by a pair of its wheels (W), and further comprising a connection opening (5) to connect to any standard maneuvering device (M) e.g. a forklift, wherein said carrier structure (2) comprises a system of attachment openings (6) for the support members (3) and provided on longitudinal surfaces (4) of the carrier (2), wherein for each wheel (W) a set of said support members (3) are connected to selected ones of said attachment openings (6) to provide a suitable mutual distance and height of said members (3) protruding laterally to support said wheel (W), when in use Further a method of using said vehicle supporting device.

## Description

### Technical field

The present invention relates to a vehicle supporting device and a method to lift and maneuver a vehicle, when the vehicle needs to be moved within a location e.g a garage for repairs.

### Background art

Salvage of cars is known to be performed by means of large trucks with a heavy trailing device to salvage a damaged or defect car and bring it to a garage for repairs, while the car is rolling on a pair of its own rear wheels or front wheels, the other pair of wheels being supported by the trailing device.

In a car repair shop or garage, need may arise to move a car from one point to another point within the location using simpler equipment.

EP 0 405 230 B1 describes a lifting device to be used together with a stacker or forklift for elevating and maneuvering vehicles before repair work is initiated

The known lifting device comprises a carrier with four parallel support rails extending laterally from the carrier to support wheels mounted on either a front axle or a rear axle and to bring a vehicle to a suitable position in a garage.

A first coaxial set of support rails are permanently fixed to the carrier in their extended position and a second set of coaxial support rails can be extended to preferably same width as the first set, when the front or rear wheels abut the first set of support rails from one direction, whereby the second set of coaxial support rails are hydraulically drawn towards the same wheels from an opposite direction reducing a distance between the two sets of rails to become shorter than a wheel or tire diameter, before raising an end of a vehicle

The known lifting device is teaching use of hydraulic cylinders to adjust said distance between support rails, and hydraulic cylinders to laterally extend/withdraw the second set of support rails, which cylinders add to the complexity and price of such device

### Summary of the invention

It is the object of the present invention to design a less complex and affordable supporting device which all garages could afford to buy, and which requires nothing more than a stacker or forklift normally found in garages, to raise and move a vehicle around in the location, manually or driven by an electromotor

A further object of the invention is to overcome problems with vehicles, whereof the wheels to be raised are damaged or punctured due to collision, whereby wheels are no longer in coaxial alignment and require different support in the two sides of the vehicle

The invention fulfills said objects by suggesting a vehicle supporting device comprising a carrier structure and support members extending from the carrier structure and serving to support a vehicle by two of its wheels, and further comprising a connection mechanism to connect to any available maneuvering device e.g. a forklift, wherein said carrier structure comprises a system of attachment points for the support members and provided in longitudinal surfaces of the carrier, wherein for each wheel a set of said support members are connected to selected ones of said attachment points to provide a suitable mutual distance and height of said members protruding laterally to support said wheel, when lifted. The attachment points can be distributed horizontally and vertically in order to obtain said distance and height of support members depending on the nature of possible damage to a wheel

In a preferred embodiment of the invention, at least one member of a set of support members has a cranked form like a crank handle, and the distance between wheel contacting surfaces on said support members can be made shorter than the outer diameter of a tire of a wheel, depending on the attachment points or receiving openings used and the angular positioning of the support members

In a further embodiment of the invention, receiving openings are formed as at least one longitudinal slit in one of said longitudinal surfaces, wherein said slit may have notches to secure the position and avoid sliding of support members in the longitudinal direction of said slit This feature makes it easy to insert support members in the slit, sliding them to abutment with the tires, and letting them engage in the adjacent notches.

Each support member is provided with a latching element preventing said member from moving out of engagement with a respective attachment point or opening, when in use Said latching element is protruding from the support member such that in one angular position, the support member can engage with said attachment points or openings, and in another angular position the support member is latched Consequently, the latching element prevents the support member from sliding out of the carrier structure by turning the support member to the in-use position

The support member according to the invention has a round, oval, square or multi-facetted cross section and an inner end of the support member is hooked into or over an edge of the carrier structure at the attachment points As an alternative to inserting support members into receiving openings, usually in the side surface of the carrier structure, said members could be attached by clamping over and around or sticking under an edge of the carrier

In order to improve support of a wheel, the support member could have an outer end covered by a support pad, and said pad may be formed as a spade

In yet another advantageous embodiment of the invention, a set of support members supporting one wheel has a locking device in the form of any type of chain, wire or a fish plate capable of maintaining a mutual distance of the support members not to be exceeded when lifted.

The invention also comprises a method of lifting and maneuvering a vehicle in a garage, wherein a supporting device comprising a carrier structure is positioned under a vehicle, then for each wheel of a front or rear axle of the vehicle a set of supporting members are attached to attachment points of a surface of said structure and protrudes laterally therefrom, said members supporting a tire on said wheel from below, the wheel contacting surfaces of the support members allowing a shorter mutual distance than the outer diameter of said tire, and said distance is secured by a locking device interlocking the support members, and finally a maneuvering device, e.g a fork lift, is brought into operational engagement with connection means such as fork openings in the carrier structure in order for a vehicle resting on the supporting device to be lifted and maneuvered

The method according to the invention preferably comprises a step, wherein the support members and/or attachment points are chosen to adapt properly to a height and distance defined by an adjacent tire/wheel on a vehicle to be moved to a new place in the location.

The supporting device according to the invention is preferably used with the method according to the invention.

### Brief description of the drawings

Figure 1 is a general view of a vehicle being lifted and maneuvered by means of a vehicle supporting device according to the invention and a standard maneuvering device,
Figure 2 is a schematic diagram of a first embodiment of a supporting device according to the invention,
Figure 3 is a partial view of one side of a carrier structure with attachment points in a vertical side surface,
Figures 4A-C show several embodiments of a support member according to the invention,
Figure 5A shows a cross sectional view of the use of a support member according to a second embodiment in Fig 4A,
Figure 5B shows the use of a support member according to a third embodiment in Fig 4B,
Figure 5C shows the use of a support member according to a fourth embodiment in Fig 4C

### Detailed description of preferred embodiments

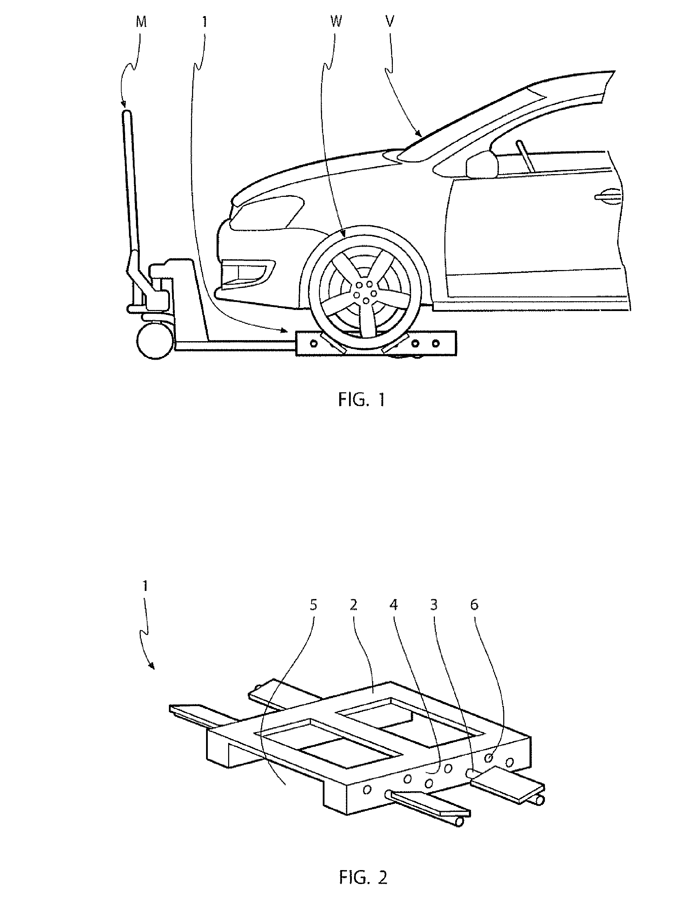

In one preferred embodiment of the invention shown in Figure 1 and 2, a supporting device 1 for a vehicle V comprises a carrier structure 2 and wheel supporting members 3 extending from surfaces 4 of the carrier structure 2, when in use, and serving to support a vehicle V by its front wheels W, as shown, or by its rear wheels Furthermore, the carrier structure 2 comprises a connection opening 5 adapted to receive forks of a stacker or forklift M, the forklift M being able to lift and then maneuver the supporting device 1 supporting the front wheels W of a vehicle V, until a suitable place is found for the vehicle V in the location

The carrier structure 2 can be configured e g in a rectangular or a U-shaped form as seen from above, and at the side surfaces 4 of the carrier 2 laterally oriented receiving openings 6 for support members 3 are provided along said side surfaces of the carrier 2 The support members 3 are insertable into said openings 6 to a suitable depth and are retained therein for the duration of bringing a vehicle to its destination point.

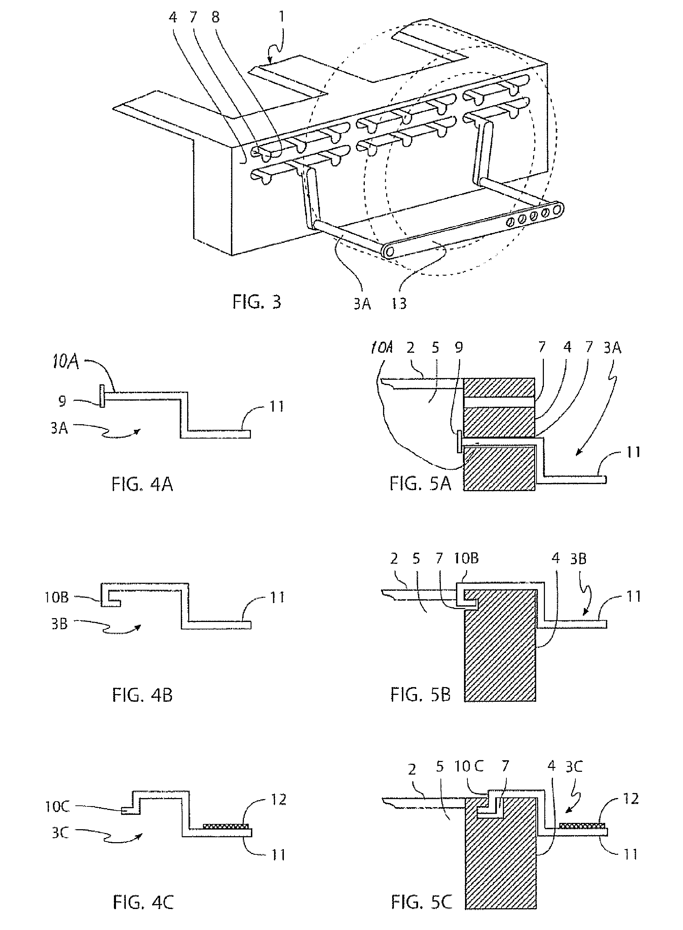

In an advantageous embodiment of the carrier 2 shown in Figure 3, the receiving openings, rather than being separate openings, are formed by a longitudinal slit 7, wherein a support member 3 can be received and slide sideways until it is allowed to engage in a suitable notch 8 In this manner, two support members 3 support a tire from opposite directions of the slit 7 Any number of slits 7 and/or separate openings 6 is within the scope of the invention and will allow for different heights of support from one side to the other side of a vehicle.

In order to prevent support members 3 from accidentally shifting out of the carrier 2, each member 3 is provided with a stop or latching element 9 (visible in Figures 4A and 5A) at the inner end 10A of a support member 3A, wherein said member 3A can freely be inserted into the carrier, and then said element 9 is brought in active position by rotating said member 3A to a position, wherein it is not allowed to pass freely out of the carrier 2 Depending on the cross section of the support member 3A and the shape of a corresponding opening 6 or slit 7, said member 3A can be fixed in a required angular position relative to a tire to be supported (see Fig 2 and 3)..

In another embodiment, the support member has a cranked form like a crank handle 3A, allowing easier fitting of the support members relative to a tire, wherein a set of support members 3 can be restricted to a maximum mutual distance by means of a fish plate or locking device 13 restricting the support surfaces of said members 3A to keep a mutual distance smaller than the diameter of a tire to be supported

Referring now also to Figures 4B, 5B and 4C, 5C showing variations 3B, 3C of the cranked support member 3A, the inner end 10B is configured such that it shall be clamped around an edge of a carrier 2, or the end 10C can be positioned over the edge of the carrier 2 and engage under a further edge or overhang thereof.

In Figure 5C, the support surface on the outer end 11 of a support member 3C is further covered by a support pad 12 comprising a resilient material or a friction layer, or formed as a spade to enlarge the support surface

## Claims

1. Supporting device (1) for a vehicle (V) comprising a carrier structure (2) and support members (3) extending from the carrier structure (2) and serving to support a vehicle by a pair of its wheels (W), and further comprising a connection opening (5) to connect to any standard maneuvering device (M) e g. a forklift, **characterized in** said carrier structure (2) comprising a system of attachment points (6) for the support members (3) and provided on longitudinal surfaces (4) of the carrier (2), wherein for each wheel (W) a set of said support members (3) are connected to selected ones of said attachment points (6) to provide a suitable mutual distance and height of said members (3) protruding laterally to support said wheel (W), when supported

2. Supporting device according to claim 1, wherein at least one of a set of support members (3) has a cranked form like a crank handle, and wherein the distance between wheel contacting surfaces on said support members (3) can be made shorter than the outer diameter of a tire on a wheel (W), depending on the attachment points or receiving openings used and rotation of the support members (3).

3. Supporting device according to claim 2, wherein said receiving openings (6) are formed as at least one longitudinal slit (7) in one of said longitudinal surfaces (4), wherein said slit (7) may have notches (8) to secure the position and prevent sliding of support members (3) in the longitudinal direction of said slit (7)

4. Supporting device according to one of the previous claims, wherein each support member (3A) is provided with a latching element (9) preventing said member (3A) from accidentally moving out of engagement with a corresponding attachment point or opening, when in use

5. Supporting device according to claim 4, wherein said latching element (9) is protruding from the support member (3A) such that in one angular position the support member (3A) can engage with said attachment points or openings, and in another angular position the support member (3A) is latched.

6. Supporting device according to one of claims 1-3, wherein the support member (3) is formed with a round, oval, square or multi-facetted cross section and an inner end (10) of the support member (3) is hooked into or over an edge of the carrier structure (2) at the attachment opening (6), and wherein the attachment openings are configured to match the cross section of the support member (3).

7. Supporting device according to one of the previous claims, wherein each support member (3) has an outer end (11) with a support surface covered by a support pad (12).

8. Supporting device according to claim 7, wherein the support member (3) and the support pad (12) is formed as a spade

9. Supporting device according to one of the previous claims, wherein said set of support members (3A) supporting one wheel (W) has a locking device (13) in the form of any type of chain, wire or a fish plate capable of maintaining a mutual distance of the support members (3A) not to be exceeded when lifted

10. Method of lifting and maneuvering a vehicle (V) in a garage, wherein a supporting device (1) comprising a carrier structure (2) is positioned under a vehicle (V), then for each wheel (W) of a front or rear axle of the vehicle (V) a set of supporting members (3) are attached to suitable attachment points (6) of a surface of said structure and protrudes laterally therefrom, said members (3) supporting a tire on said wheel (W) from below, the wheel contacting surfaces of the support members (3) allowing a mutual distance less than the outer diameter of said tire, said distance being secured by mounting a locking device (13) interlocking the outer ends (11) of each set of support members (3A), and finally a maneuvering device (M) e.g. a fork lift is brought into operational engagement with fork openings (5) in the carrier structure (2) in order for a vehicle (V) supported by the supporting device (1), to be lifted and maneuvered

11. Method according to claim 10, wherein the support members (3) and/or attachment points (6) are chosen to adapt properly to a height and distance defined by a corresponding tire/wheel (W) on a vehicle (V) to be moved at a location.

12. Method according to claims 10 or 11, wherein a defined distance between the support members (3) of each set is secured by a locking device in the form of any type of chain, wire or fish plate (13)

13. Method according to any of claims 10-12 making use of a vehicle supporting device (1) according to any of claims 1-9
